# EUROPEAN PATENT SPECIFICATION

(11) **EP 3 628 887 B1**
(45) Date of publication and mention of the grant of the patent: **22.11.2023**
(21) Application number: 19199140.5
(22) Date of filing: 24.09.2019
(51) Int. Cl.: F16F 9/04, B60G 11/27, B60G 11/28, B61F 5/10

(54) **AIR SPRING AND METHOD FOR ASSEMBLING AIR SPRING**
LUFTFEDER UND VERFAHREN ZUR MONTAGE EINER LUFTFEDER
RESSORT PNEUMATIQUE ET PROCÉDÉ D'ASSEMBLAGE DE RESSORT PNEUMATIQUE

(30) Priority: 27.09.2018 JP 2018181314
(43) Date of publication of application: 01.04.2020
(73) Proprietor: Nitta Chemical Industrial Products Co., Ltd., Osaka-shi, Osaka 556-0022 (JP)
(72) Inventor: YASUNAGA, Yuki, Osaka-shi, Osaka 556-0022 (JP)
(74) Representative: Abel & Imray LLP

(56) References cited:
- EP-A2- 1 388 441
- EP-A2- 2 775 162
- CN-B- 102 000 971
- DE-U1-202015 008 448

## Description

### BACKGROUND OF THE INVENTION

### Field of the Invention

The present invention relates to an air spring that is mounted on a vehicle and includes a top surface plate and a lower member, and a method for assembling an air spring.

### Description of the Related Art

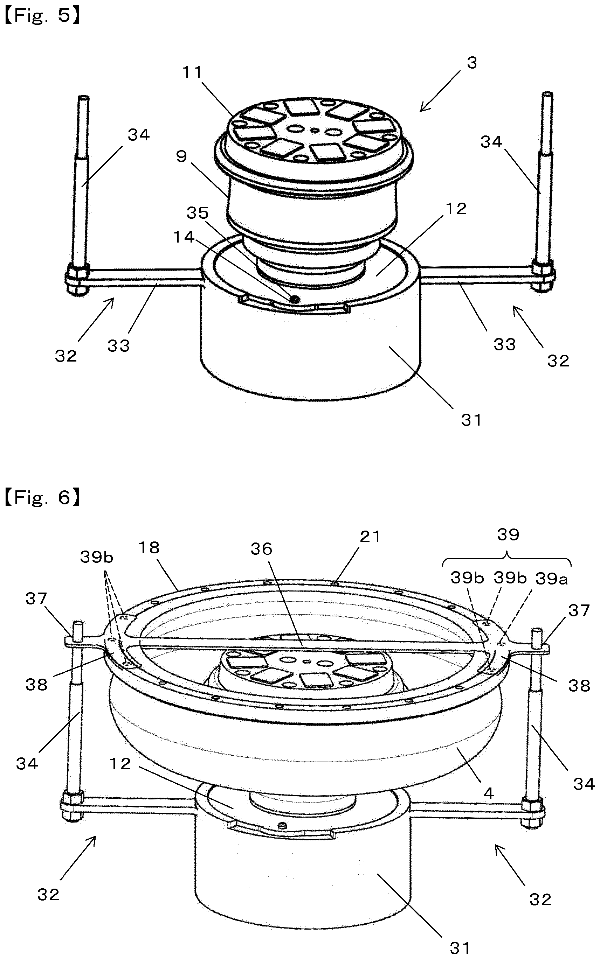

Conventionally, as an air spring for use in a vehicle such as a railway vehicle, there has been known an air spring including a top surface plate that is attached to a vehicle body of a vehicle, a lower member that is disposed on a bogie side below the top surface plate, and a rubber cylindrical flexible member (a diaphragm, bellows or the like) that is placed over the top surface plate and the lower member, as illustrated in FIG. 5 of Japanese Patent Laid-Open No. 10-288236. The lower member includes a lower surface plate to which a lower end portion of the diaphragm is fitted, and an elastic mechanism that is interposed between the lower surface plate and the bogie frame. The elastic mechanism is generally called a stopper. The elastic mechanism having a laminated rubber interposed between the top plate and the bottom plate is often used. The laminated rubber includes a plurality of laminated elastic body layers with a steel plate inserted between the elastic body layers.

When the air spring of the above described configuration is mounted on a vehicle, an orientation of the top surface plate to the vehicle body, and an orientation of the lower member to the bogie frame may be set in advance. In this case, in the air spring, it is necessary that the relative positional relationship between the top surface plate and the lower member is a positional relationship (phase relationship) which is specified in advance, with a center axis of the air spring as the center. When the relative positional relationship between the top surface plate and the lower member deviates, there arises the problem that the air spring cannot be attached to the vehicle.

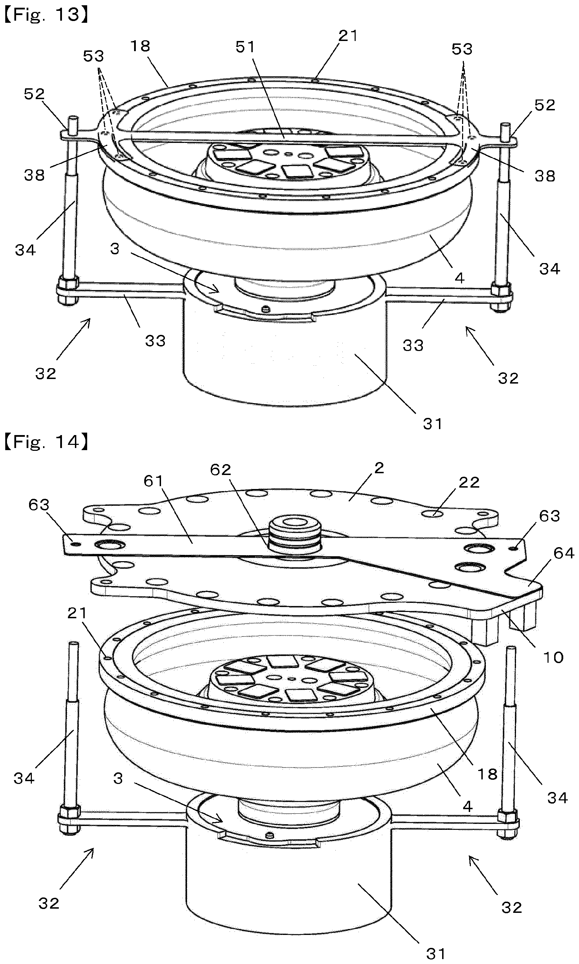

In order to solve the above described problem, an assembling jig is used when an air spring is assembled. FIGS. 13 to 15 are views illustrating a procedure of assembling the air spring by using the assembling jig. As illustrated in FIG. 13, the assembling jig has a pedestal section 31 on which a lower member 3 is positioned and placed, and a pair of guide sections 32 and 32 that are formed at both left and right sides of the pedestal section 31. The guide section 32 has a base section 33 that is provided to protrude sideward of the pedestal section 31, and a pole section 34 that is provided to be raised perpendicularly from a tip end portion of the base section 33.

After a lower end portion of a cylindrical flexible member 4 is fitted to the lower member 3 which is placed on the pedestal section 31, a fitting ring 18 in a state of being positioned by a first positioning member 51 is fitted to an upper end portion of the flexible member 4. A plurality of screw holes 21 are formed in the fitting ring 18 at equal intervals along the same circumference from a center of the fitting ring 18. The first positioning member 51 has a pair of guide holes 52 and 52 which are formed in both ends of an elongated plate-shaped main body section, and through which the left and right pole sections 34 and 34 are insertable, and a plurality of pin sections 53 that can be fitted in the screw holes 21 formed in the fitting ring 18. The first positioning member 51 inserts the pole sections 34 into the guide holes 52 in a state where the first positioning member 51 is integrated with the fitting ring 18 by inserting the pin sections 53 into the screw holes 21. Thereby, it becomes possible to fit the screw holes 21 of the fitting ring 18 to the upper end portion of the flexible member 4 in a state where the screw holes 21 of the fitting ring 18 are positioned to the lower member 3.

After the fitting ring 18 is fitted to the upper end portion of the flexible member 4, the first positioning member 51 is detached from the guide section 32, and as illustrated in FIG. 14, the top surface plate 2 with a second positioning member 61 fitted thereto is placed on the fitting ring 18. On the top surface plate 2, a plurality of through-holes 22 are formed at equal intervals along the same circumference from a center of the top surface plate 2, and all the screw holes 21 and the through-holes 22 are provided so as to be aligned with each other. The second positioning member 61 is in a flat-plate shape, and has a center hole section 62 in which a boss section 6 of the top surface plate 2 can be fitted, a pair of guide holes 63 and 63 through which the left and right pole sections 34 and 34 are insertable, and an aligning section 64 that is provided in a same shape as a part of an aligning fixing section 10 that is formed on the top surface plate 2.

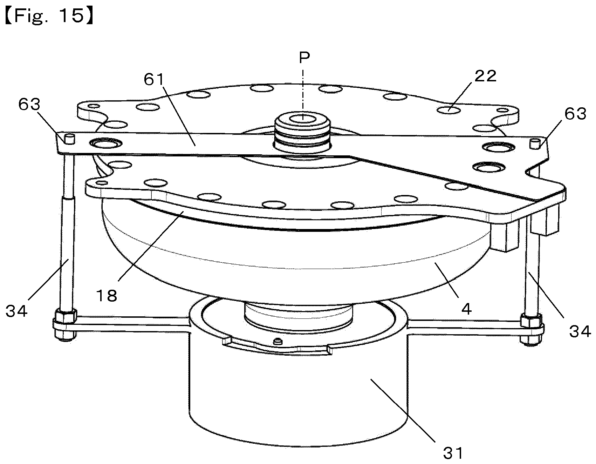

The second positioning member 61 inserts the pole sections 34 into the guide holes 63 in a state where the boss section 6 of the top surface plate 2 is fitted through the center hole section 62. Subsequently, as illustrated in FIG. 15, the aligning section 64 and the aligning fixing section 10 of the top surface plate 2 are overlaid on each other and aligned, whereby it becomes possible to position the top surface plate 2 to the fitting ring 18 and the lower member 3.

In this state, screws 23 are screwed into the screw holes 21 through the through-holes 22 from above the top surface plate 2, and thereby the air spring can be assembled. DE202015008448 describes a bellows air spring for air-suspended machine bearings. EP2775162 describes an air spring with a piston, a top plate, a clamp ring, a snap ring and a flexible member.

### SUMMARY OF THE INVENTION

However, in the method for assembling the air spring by using the above described assembling jig, it is necessary to detach the first positioning member from the guide sections and replace the first positioning member with the second positioning member to position the top surface plate, and the positional relationship between the pole sections of the guide sections and the pedestal section may deviate during replacement of the first positioning member with the second positioning member, and thereby there has arisen the possibility that the relative positional relationship between the top surface plate and the lower member deviates. In addition, there has been also the problem that it is difficult to distinguish the poorly assembled air spring where the relative positional relationship between the top surface plate and the lower member deviates, from air springs where the relative positional relationships between the top surface plates and the lower members are normal, in appearance, so that defect check takes time.

Thus, an object of the present invention is to provide an air spring capable of suppressing occurrence of a deviation of a relative positional relationship between a top surface plate and a lower member, and suppressing a possibility of a poorly assembled air spring mixing into assembled air springs, and to provide a method for assembling the air spring.

In order to attain the above described object, in accordance with a first aspect of the present invention there is provided an air spring comprising a top surface plate, a lower member, a cylindrical flexible member that is interposed between the top surface plate and the lower member, a fitting ring that fixes an upper end portion of the flexible member to the top surface plate, and a plurality of fastening sections that fasten the fitting ring and the top surface plate,
characterized in that
the air spring comprises an allowable section that allows proper fastening of the fitting ring and the top surface plate only when the fitting ring and the top surface plate are relatively in a single specific positional relationship with a center axis of the air spring as a center.

The plurality of fastening sections may include a plurality of fastening section sets in each of which a screw hole formed in one of the fitting ring and the top surface plate, a through-hole formed in another one of the fitting ring and the top surface plate, and a screw that is screwed into the screw hole through the through-hole are made one set, a screw hole diameter, a through-hole diameter and a screw diameter of at least one fastening section set out of the plurality of fastening section sets may be provided to be different from screw hole diameters, through-hole diameters and screw diameters of other fastening section sets, and the at least one fastening section set may function as the allowable section.

Further, the plurality of fastening sections may include a plurality of fastening section sets in each of which a screw hole formed in one of the fitting ring and the top surface plate, a through-hole formed in another one of the fitting ring and the top surface plate, and a screw that is screwed into the screw hole through the through-hole are made one set, set positions of the plurality of fastening sections may be provided at equal intervals along a same circumference with a center axis of the air spring as a center, in the fitting ring and the top surface plate, at least one fastening section set out of the plurality of fastening section sets may be disposed in a position deviated in a radial direction of the air spring and/or a circumferential direction of the air spring from the set positions, other fastening section sets may be disposed in the set positions, and the at least one fastening section set may function as the allowable section.

Further, the allowable section may include a protruded section formed in one of the fitting ring and the top surface plate, and a recessed section formed in another one of the fitting ring and the top surface plate, and only when the fitting ring and the top surface plate are relatively in a specific positional relationship with a center axis of the air spring as a center, the protruded section may be fitted in the recessed section.

In accordance with a second aspect of the present invention, there is provided a method for assembling an air spring comprising a top surface plate, a lower member, a cylindrical flexible member interposed between the top surface plate and the lower member, a fitting ring that fixes an upper end portion of the flexible member to the top surface plate, and a plurality of fastening sections that fasten the fitting ring and the top surface plate,
characterized in that
the air spring comprises an allowable section that allows proper fastening of the fitting ring and the top surface plate only when the fitting ring and the top surface plate are relatively in a single specific positional relationship with a center axis of the air spring as a center, and
after a lower end portion of the flexible member is attached to the lower member, the fitting ring may be fitted to an upper end portion of the flexible member while a position of the allowable section is adjusted so that a relative positional relationship between the top surface plate and the lower member after the fitting ring and the top surface plate are properly fastened becomes a positional relationship specified in advance, and
thereafter, the fitting ring and the top surface plate may be properly fastened.

According to the air spring according to one aspect of the above described present invention, the allowable section that allows proper fastening of the fitting ring and the top surface plate only when the fitting ring and the top surface plate are relatively in a specific positional relationship with the center axis of the air spring as the center is included, so that if the fitting ring is fitted to the lower member in the state where the fitting ring is positioned by the first positioning member, in the assembling jig, it is not necessary to use the second positioning member. Accordingly, the deviation of the relative positional relationship between the top surface plate and the lower member by replacement of the first positioning member with the second positioning member can be suppressed.

Further, the allowable section allows proper fastening of the fitting ring and the top surface plate only when the fitting ring and the top surface plate are relatively in the specific positional relationship, so that the air spring cannot be assembled properly in an external appearance in the state where the relative positional relationship between the top surface plate and the lower member is deviated, and it becomes possible to suppress the possibility that a poorly assembled product mixes into the air spring after assembly. Those skilled in the art will realize that method of the second aspect of the present invention may comprise the features of the air spring of the first aspect of the present invention, and *vice versa.*

The invention will now be described by way of example only with reference to the following figures of which:

### BRIEF DESCRIPTION OF THE DRAWINGS

FIG. 1 is a plan view illustrating a first embodiment of an air spring according to the present invention;
FIG. 2 is a sectional view taken along A-A of the air spring in FIG. 1;
FIG. 3 is an enlarged view of part B enclosed by a circle in FIG. 2;
FIG. 4 is a schematic view illustrating a railway vehicle on which the air springs of the present invention are mounted;
FIG. 5 is a view illustrating an assembly process of the air spring of the present invention, and illustrating a state where a lower member is placed on an assembling jig;
FIG. 6 is a view illustrating a state where a flexible member is attached to the lower member in FIG. 5, and thereafter, a fitting ring positioned by a positioning member is set to the assembling jig and is fitted to the flexible member;
FIG. 7 is a view illustrating a state where the positioning member is detached from the fitting ring in FIG. 6;
FIG. 8 is a view illustrating a state of attaching a top surface plate to the fitting ring in FIG. 7 while aligning the top surface plate with the fitting ring;
FIG. 9 is a view illustrating a state after the top surface plate in FIG. 8 is placed on the fitting ring;
FIG. 10 is a plan view illustrating a second embodiment of the air spring according to the present invention;
FIG. 11 is a plan view illustrating a modified example of the second embodiment of the air spring according to the present invention;
FIG. 12 is a plan view illustrating a third embodiment of the air spring according to the present invention;
FIG. 13 is a view illustrating an assembly process of a conventional air spring, and illustrating a state where a fitting ring positioned by a first positioning member is set to an assembling jig and is fitted to a flexible member;
FIG. 14 is a view illustrating a state where the first positioning member in FIG. 13 is detached, and a top surface plate 2 to which a second positioning member 61 is fitted is set to the assembling jig; and
FIG. 15 is a view illustrating a state where the second positioning member and the top surface plate in FIG. 14 are aligned with each other.

### DETAILED DESCRIPTION OF THE PREFERRED EMBODIMENTS

### [First embodiment]

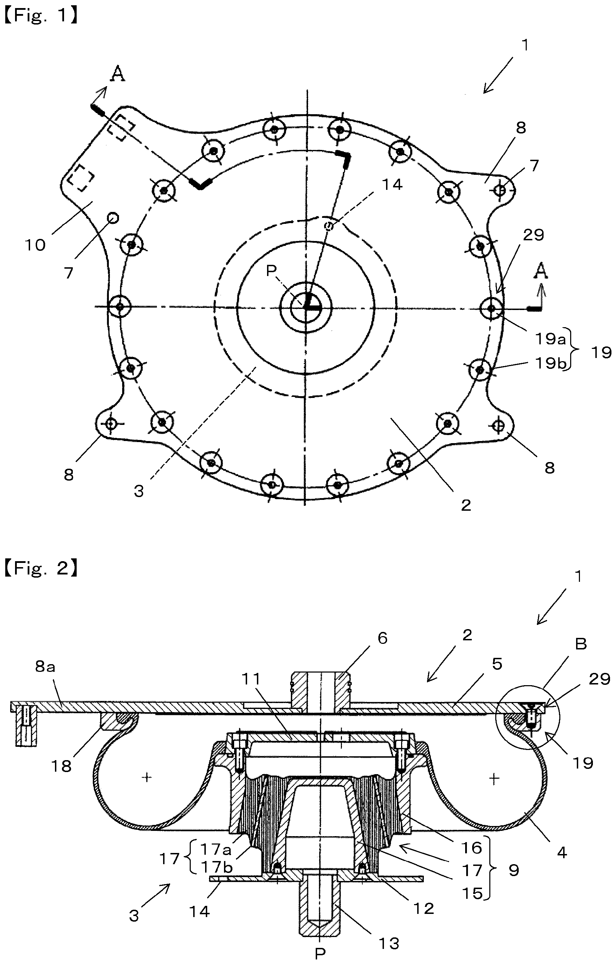

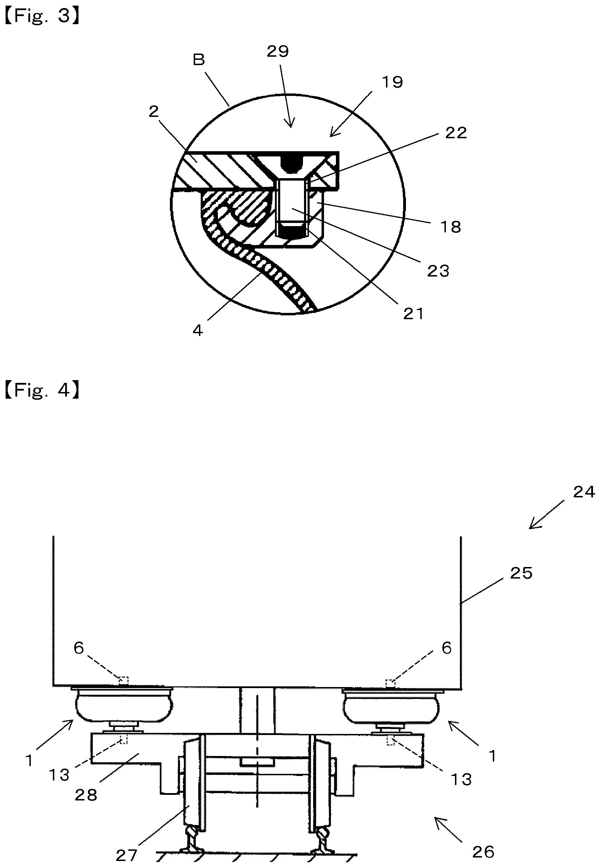

Hereinafter, a first embodiment of the present invention will be described based on the drawings. FIG. 1 is a plan view illustrating an embodiment of an air spring for a railway vehicle as an air spring according to the present invention. FIG. 2 is a sectional view taken along A-A of the air spring in FIG. 1, and FIG. 3 is an enlarged view of part B enclosed by a circle in FIG. 2.

As illustrated in FIGS. 1 to 3, an air spring 1 of the present embodiment includes a top surface plate 2, a lower member 3 that is disposed at a lower side of the top surface plate 2, and a cylindrical flexible member 4 between the top surface plate 2 and the lower member 3. The top surface plate 2 has a main body section 5 which is formed into a substantially disk shape, a cylindrical boss section 6 that is formed in a center portion of the main body section 5, and can be fitted to a vehicle body, and fixing sections 8 and 10 that are provided to protrude outward in a radial direction from an outer edge portion of the main body section 5, and have through-holes 7 for screw-fastening. The fixing section 10 is a fixing section for aligning that fixes the top surface plate 2 to the vehicle body while aligning longitudinal and lateral directions of the top surface plate 2, and is formed into a shape (rectangle in plan view) and a size that are different from the shape and size of the other fixing sections 8.

The lower member 3 includes an elastic mechanism 9, a discoidal lower surface plate 11 that is fitted to a top portion of the elastic mechanism 9, and a disk-shaped support member 12 that is fitted to a bottom portion of the elastic mechanism 9. In a center of the support member 12, a shaft section 13 is provided to hang downward to be fitted to a bogie. Further, in the support member 12, a positioning hole 14 that can receive a positioning pin provided at the bogie is formed.

The elastic mechanism 9 includes a center member 15, an outer cylinder 16, and an elastic layer 17 interposed between the center member 15 and the outer cylinder 16. The elastic layer 17 has a structure in which an elastic material layer 17a and a middle cylinder 17b are alternately laminated, and is integrally molded by vulcanization with the center member 15 and the outer cylinder 16. Specifically, the center member 15 is formed into a covered cylinder shape formed into a taper cylinder shape, is provided with the elastic material layer 17a of a rubber material over an entire circumference of an outer periphery of the center member 15, and is formed into a trapezoidal shape in section. Thereby, a so-called conical stopper is formed. The center member 15, the outer cylinder 16 and the middle cylinder 17b are formed of a rigid material such as a metal.

As the elastic mechanism 9, any elastic mechanism that includes a laminated rubber structure, and has a function as a stopper can be adopted, and a laminated rubber in which an elastic material layer and a rigid plate are alternately and horizontally laminated between a top plate and a bottom plate can be also used. Further, as the lower member 3, it is possible to adopt a configuration from which the elastic mechanism 9 is excluded.

The flexible member 4 is formed of a cylindrical laminated rubber that has a reinforced rubber layer in which a reinforcing cord is buried as a middle layer, and at each of an upper end portion and a lower end portion of the flexible member 4, thick bead portions formed by winding the reinforced rubber layers on bead cores are formed. As the flexible member 4, a diaphragm or a bellows is specifically used. The upper end portion of the flexible member 4 is hermetically fixed to the top surface plate 2 by a plurality of fastening sections 19 that fasten a fitting ring 18 and the top surface plate 2 via the fitting ring 18, and a lower end portion of the flexible member 4 is hermetically fitted on the lower surface plate 11.

As shown in FIG. 3, a screw hole 21 which is formed in the fitting ring 18, a through-hole 22 which is formed in the top surface plate 2, and a screw 23 that is screwed into the screw hole 21 through the through-hole 22 are made into one set, and the plurality of fastening sections 19 include a plurality of sets as mentioned above. Specifically, the plurality of fastening sections 19 are formed at equal intervals along a same circumference having a center axis P of the air spring 1 as a center. In the present embodiment, 18 fastening sections 19 are provided.

FIG. 4 is a schematic view illustrating a railway vehicle 24 on which the air springs 1 of the present invention are mounted. As illustrated in the drawing, the air spring 1 is installed between a vehicle body 25 and a bogie 26. The bogie 26 includes a pair of left and right wheels 27 and 27 that roll on a rail, and a support frame 28 in which the pair of wheels 27 and 27 are placed back and forth. A pair of left and right air springs 1 and 1 are interposed between a bottom surface of the vehicle body 25 and the support frame 28.

In the support frame 28 of the bogie 26, recessed sections (not illustrated) which can receive the shaft sections 13 of the support members 12 are provided, and positioning pins (not illustrated) of the support members 12 are vertically provided in vicinities of the recessed sections, on which the positioning holes 14 of the support members 12 can be fitted. On the bottom surface of the vehicle body 25, boss receiving sections (not illustrated) in recessed shapes in which the boss sections 6 can be received are provided, and screw holes not illustrated that can be aligned with the through-holes 7 of the fixing sections 8 and 10 of the top surface plate 2 are formed around the boss receiving sections, so that the top surface plate 2 can be screwed onto the bottom surface of the vehicle body 25 with screws such as bolts.

Accordingly, when the air spring 1 is mounted on the vehicle 24 by fitting the positioning hole 14 of the support member 12 onto the positioning pin, and correctly aligning the through-holes 7 of the fixing sections 8 of the top surface plate 2 with the screw holes in the bottom surface of the vehicle body 25, a relative positional relationship between the top surface plate 2 and the lower member 3 is a positional relationship (phase relationship) that is specified in advance, with the center axis P as the center when the air spring 1 is viewed in plan view as illustrated in FIG. 1.

In other words, the air spring 1 can be assembled in a state where the top surface plate 2 and the lower member 3 are in various positional relationships (phase relationships) with the center axis P of the air spring 1 as the center, but in order to correctly mount the air spring 1 to the vehicle 24, it is necessary that the top surface plate 2 and the lower member 3 after assembly of the air spring 1 are relatively in the positional relationship specified in advance with the center axis P of the air spring 1 as the center.

Then, in order that the relative positional relationship between the top surface plate 2 and the lower member 3 after assembly of the air spring 1 is in the positional relationship specified in advance, it is necessary to fasten both the fitting ring 18 and the top surface plate 2 so that the fitting ring 18 and the top surface plate 2 are relatively in a specific positional relationship with the center axis P of the air spring 1 as the center, at a time of assembly of the air spring 1.

For this purpose, in the present embodiment, the air spring 1 is provided with an allowable section 29 that allows proper fastening of the fitting ring 18 and the top surface plate 2 only when the fitting ring 18 and the top surface plate 2 are relatively in a specific positional relationship with the center axis P of the air spring 1 as the center. The upper end portion of the flexible member 4 is hermetically fitted to the top surface plate 2 by properly fastening the fitting ring 18 and the top surface plate 2.

Specifically, a screw hole diameter, a through-hole diameter and a screw diameter of one fastening section 19a out of the plurality of fastening sections 19 are made different diameters from screw hole diameters, through-hole diameters and screw diameters of other 17 fastening sections 19b. In other words, the screw hole diameter, the through-hole diameter and the screw diameter of the fastening section 19a are made to be smaller diameters or larger diameters than the screw hole diameters, the through-hole diameters and the screw diameters of the fastening sections 19b, and the fastening section 19a of the one set is made the allowable section 29. Note that in the present embodiment, the screw hole diameter, the through-hole diameter and the screw diameter of the fastening section 19a are made smaller than the screw hole diameter, the through-hole diameter and the screw diameter of the fastening section 19b.

In the present embodiment, the one fastening section 19a is made the allowable section 29, but the allowable section 29 is not limited to this, and a plurality of fastening sections 19a are made to be used as the allowable section 29. In this case, the plurality of fastening sections 19a with the sets to be the allowable section 29 need to be disposed to allow proper fastening of the fitting ring 18 and the top surface plate 2 only when the top surface plate 2 and the lower member 3 are relatively in the specific positional relationship.

In the above described configuration, all the fastening sections 19 cannot be properly fastened unless the through-hole 22 and the screw hole 21 which are parts of the allowable section 29 are aligned so as to face each other and are fastened with the screw 23 having a small screw diameter, and the other fastening sections 19b are fastened with the screws 23 having large screw diameters. In other words, if it can be confirmed by visual recognition that all the fastening sections 19 are properly fastened, it is proven that the fitting ring 18 and the top surface plate 2 are relatively in the specific positional relationship with the center axis P of the air spring 1 as the center, and it becomes possible to suppress the possibility that a poorly assembled product mixes into the air springs 1 after assembly.

The method for assembling the above described air spring 1 will be described. As illustrated in FIG. 5, the assembling jig includes a pedestal section 31 where the lower member 3 is positioned and is placed, and a pair of guide sections 32 and 32 that are formed at both left and right sides of the pedestal section 31. The guide section 32 has a base section 33 that is provided to protrude sideward of the pedestal section 31, and a pole section 34 that is provided to be raised perpendicularly from a tip end portion of the base section 33.

In a center of the pedestal section 31, a recessed section (not illustrated) in which the shaft section 13 of the support member 12 of the lower member 3 can be received is formed, and further, in the pedestal section 31, in a vicinity of the recessed section, a pin 35 that can be fitted to the positioning hole 14 of the support member 12 is vertically provided. The pin 35 is formed to be likened to the positioning pin formed at the support frame 28. Accordingly, by fitting the positioning hole 14 onto the pin 35, it becomes possible to position the lower member 3 to the guide sections 32, to the bogie 26 by extension.

After the lower end portion of the flexible member 4 is fitted to the lower member 3 which is placed on the pedestal section 31, the fitting ring 18 in a state positioned by a positioning member 36 is fitted to an upper end portion of the flexible member 4 as illustrated in FIG. 6. In the fitting ring 18, a plurality of screw holes 21 are formed at equal intervals along the same circumference from the center of the fitting ring 18. The positioning member 36 includes guide holes 37 and 37 that are formed at both ends of a main body section in an elongated plate shape and allow the left and right pole sections 34 and 34 to be inserted therethrough, and fitting sections 38 that are in substantially inverted U-shapes in section that are fitted to two spots in an upper end portion of the fitting ring 18 that faces the fitting sections 38 in a diameter direction, from above.

In a top surface of the fitting section 38, a pin section 39 is formed downward, and can be fitted to the screw holes 21 which are formed in the fitting ring 18. In the fitting sections 38 and 38 at the two spots, six pin sections 39 in total are formed, and one pin section 39a among them has a different diameter from diameters of the other pin sections 39b in accordance with the screw diameter of the fastening section 19a to be the allowable section 29 (in the present embodiment, the pin section 39a has a smaller diameter than the pin section 39b). By using the positioning member 36 of the above described configuration, it becomes possible to fit the fitting ring 18 to the flexible member 4 while positioning the screw hole 21 that is a part of the allowable section 29.

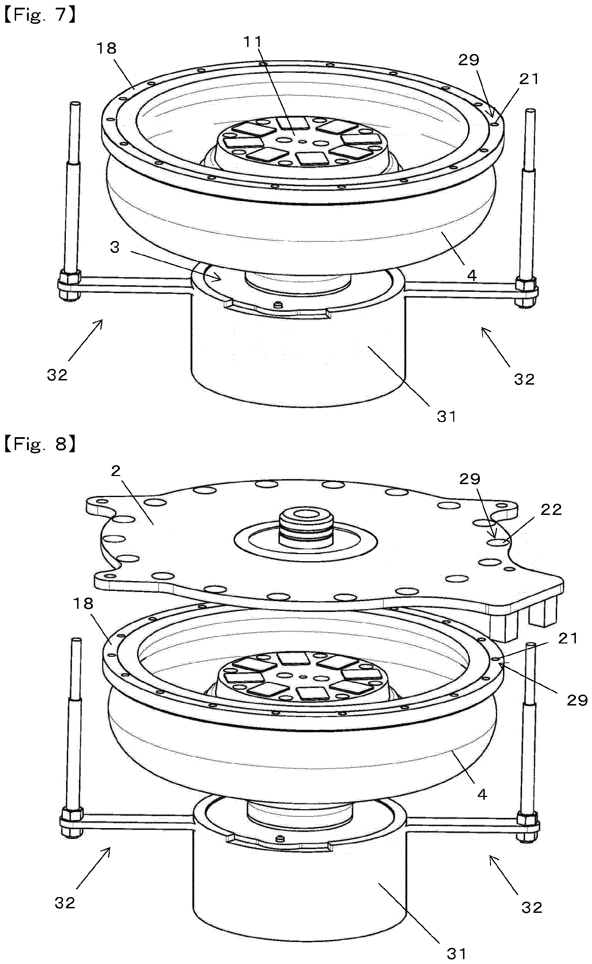

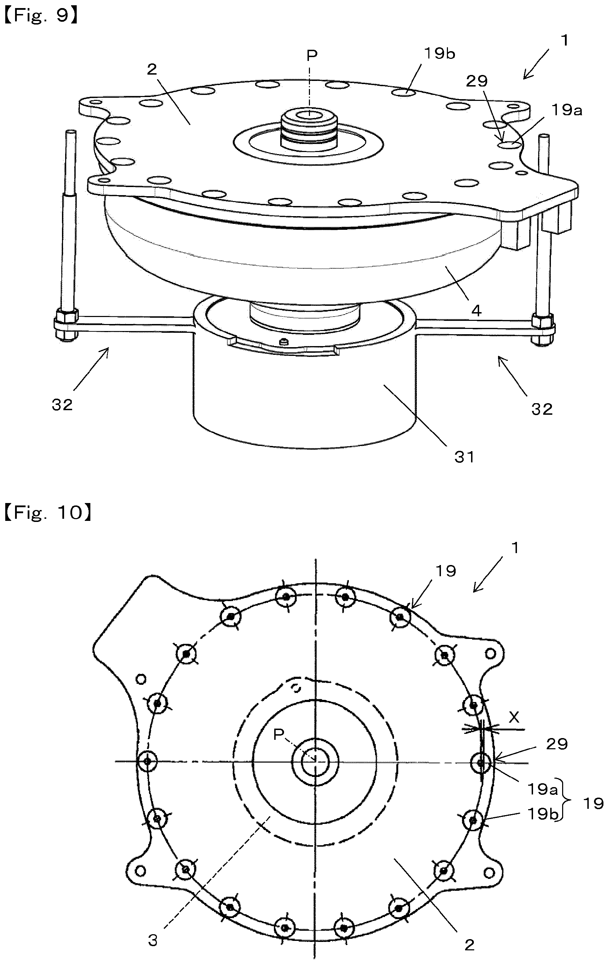

As illustrated in FIG. 7, in the state where the positioning member 36 is detached from the guide section 32, the screw hole 21 with the small diameter that is a part of the allowable section 29 is positioned to the lower member 3. Subsequently, as illustrated in FIG. 8, by aligning the through-hole 22 with the small diameter that is a part of the allowable section 29 on the screw hole 21 with the small diameter that is a part of the allowable section 29 to face the screw hole 21, without using the second positioning member, the top surface plate 2 is placed on the fitting ring 18. Thereby, the fitting ring 18 and the top surface plate 2 are relatively in the specific positional relationship with the center axis P of the air spring 1 as the center (refer to FIG. 9).

Thereafter, the fastening section 19a to be the allowable section 29 is screwed with the screw 23 with the small diameter, and the other fastening sections 19b are screwed with the screws 23 with the large diameters, respectively. Thereby, the fitting ring 18 and the top surface plate 2 can be properly fastened. The air spring 1 which is assembled by the aforementioned procedures has the top surface plate 2 and the lower member 3 relatively in the positional relationship which is specified in advance with the center axis P of the air spring 1 as the center, and becomes attachable to the vehicle 24.

As described above in detail, the method for assembling the air spring of the present invention is characterized in that the air spring 1 is provided with the allowable section 29 that allows proper fastening of the fitting ring 18 and the top surface plate 2 only when the fitting ring 18 and the top surface plate 2 are relatively in the specific positional relationship with the center axis P of the air spring 1 as the center, after the lower end portion of the flexible member 4 is attached to the lower member 3, the fitting ring 18 is fitted to the upper end portion of the flexible member 4 while the position of the allowable section 29 is adjusted so that the relative positional relationship between the top surface plate 2 and the lower member 3 after the fitting ring 18 and the top surface plate 2 are properly fastened becomes the positional relationship specified in advance, and thereafter, the fitting ring 18 and the top surface plate 2 are properly fastened.

Specifically, each of the fitting ring 18 and the top surface plate 2 includes a component that is a part of the allowable section 29, and the fitting ring 18 is fitted to the upper end portion of the flexible member 4 while positions of the components of the allowable section 29 that is provided in the fitting ring 18 are adjusted. Thereafter, the component of the allowable section 29 which is provided at the top surface plate 2, and the components of the allowable section 29 that are provided at the fitting ring 18 are aligned so as to face each other, and thereby the fitting ring 18 and the top surface plate 2 can be properly fastened. Thereby, only one kind of positioning member 36 can be used as the assembling jig, and it is not necessary to replace the positioning member, so that occurrence of a deviation of the relative positional relationship between the top surface plate 2 and the lower member 3 can be suppressed.

### [Second embodiment]

FIG. 10 is a plan view of an air spring illustrating a second embodiment of the present invention. The present embodiment is characterized in that in the fitting ring 18 and the top surface plate 2, set positions of a plurality of fastening sections 19 are provided at equal intervals along a same circumference with the center axis P of the air spring 1 as the center, and at least one fastening section 19a out of the plurality of fastening sections 19 is disposed in a position deviated in the radial direction of the air spring 1 and/or a circumferential direction of the air spring from the set position, the other fastening sections 19b are disposed in the set positions, and the at least one fastening section 19a functions as the allowable section 29, and other configurations are similar to the configurations of the first embodiment. Note that sizes of the screw hole 21, the through-hole 22 and the screw 23 that are parts of the fastening section 19a are same as the sizes of the screw holes 21, the through-holes 22 and the screws 23 of the other fastening sections 19b.

As illustrated in FIG. 10, in the present embodiment, the one fastening section 19a is disposed in the position deviated inward in the radial direction by a distance X from the set position, but the present invention is not limited to this, and it is also possible to make a plurality of fastening sections 19a the allowable section 29. In this case, the plurality of fastening sections 19a to be the allowable section 29 need to be disposed to allow proper fastening of the fitting ring 18 and the top surface plate 2 only when the top surface plate 2 and the lower member 3 are relatively in the specific positional relationship.

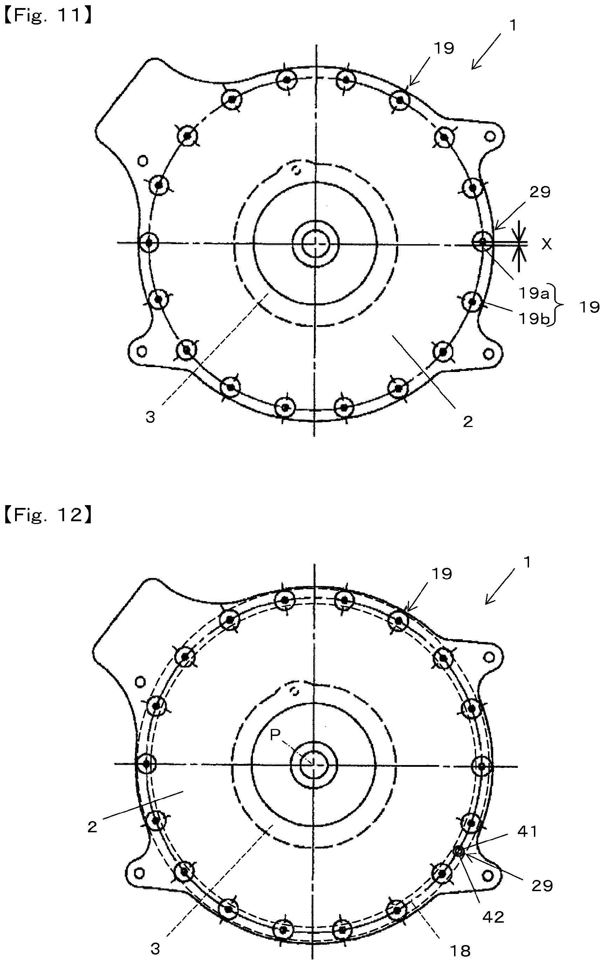

According to the above described configuration, only when the fitting ring 18 and the top surface plate 2 are relatively in the specific positional relationship, with the center axis P of the air spring 1 as the center, the fitting ring 18 and the top surface plate 2 can be properly fastened with respect to all the fastening sections 19. Note that in the present embodiment, the fastening section 19a is disposed in a position deviated inward in the radial direction by the distance X from the set position, but the position is not limited to this, and the fastening section 19a may be disposed in a position deviated in the circumferential direction by the distance X from the set position as illustrated in FIG. 11, or may be disposed in a position deviated in both directions of the radial direction and the circumferential direction.

### [Third embodiment]

FIG. 12 is a plan view of an air spring illustrating a third embodiment of the present invention. The present embodiment is characterized in that, as an allowable section, a protruded section formed in one of the fitting ring 18 and the top surface plate 2, and a recessed section that is formed in the other one of the fitting ring 18 and the top surface plate 2, and engages with the protruded section when the fitting ring 18 and the top surface plate 2 are properly fastened are included, and the other configurations are similar to the configurations of the first embodiment.

As illustrated in FIG. 12, in the present embodiment, as the allowable section 29, a protruded section 41 is formed on the fitting ring 18, and a through-hole is formed as the recessed section 42 in the top surface plate 2. According to the above described configuration, the fitting ring 18 and the top surface plate 2 can be properly fastened with respect to all the fastening sections 19 only when the fitting ring 18 and the top surface plate 2 are relatively in the specific positional relationship, with the center axis P of the air spring 1 as the center. Note that in the present embodiment, as the allowable section 29, a pair of the protruded section 41 and the recessed section 42 are provided, but the present invention is not limited to this, and it is also possible to provide a plurality of pairs of the protruded sections 41 and the recessed sections 42.

The embodiments of the present invention are described above, but the scope of the present invention is not limited to this, and the present invention can be carried out by adding various changes. For example, in the present embodiment, the screw holes 21 are formed in the fitting ring 18, the through-holes 22 are formed in the top surface plate 2, and the fitting ring and the top surface plate are screwed by using the screws 23 from the top surface plate side. However, the present invention is not limited to this, and the through-holes 22 may be formed in the fitting ring 18, the screw holes 21 may be formed in the top surface plate 2 to be screwed from the fitting ring side. Further, the air spring of the present invention can be used not only for a railway vehicle, but also for an automobile such as a truck and a bus.

The components disclosed in the present embodiments and the above described modified examples can be combined with each other, and by combining the components, new technical characteristics can be formed.

### Reference Signs List

- 1: Air spring
- 2: Top surface plate
- 3: Lower member
- 4: Flexible member
- 5: Main body section
- 6: Boss section
- 7: Through-hole
- 8: Fixing section
- 9: Elastic mechanism
- 10: Aligning fixing section
- 11: Lower surface plate
- 12: Support member
- 13: Shaft section
- 14: Positioning hole
- 18: Fitting ring
- 19: Fastening section
- 19a: One fastening section
- 19b: Other fastening sections
- 21: Screw hole
- 22: Through-hole
- 23: Screw
- 29: Allowable section
- 31: Pedestal section
- 32: Guide section
- 33: Base section
- 34: Pole section
- 35: Pin
- 36: Positioning member
- 37: Guide hole
- 38: Fitting section
- 39: Pin section
- 39a: One pin section
- 39b: Other pin sections
- 41: Protruded section
- 42: Recessed section
- P: Air spring center axis

## Claims

1. An air spring (1) comprising:
a top surface plate (2);
a lower member (3);
a cylindrical flexible member (4) that is interposed between the top surface plate and the lower member;
a fitting ring (18) that fixes an upper end portion of the flexible member to the top surface plate; and
a plurality of fastening sections (19) that fasten the fitting ring and the top surface plate;
**characterized in that**
the air spring comprises an allowable section (29) that allows proper fastening of the fitting ring and the top surface plate only when the fitting ring and the top surface plate are relatively in a single specific positional relationship with a center axis of the air spring as a center.

2. The air spring according to claim 1,
wherein the plurality of fastening sections include a plurality of fastening section sets in each of which a screw hole (21) formed in one of the fitting ring and the top surface plate, a through-hole (22) formed in another one of the fitting ring and the top surface plate, and a screw that is screwed into the screw hole through the through-hole are made one set, a screw hole diameter, a through-hole diameter and a screw diameter of at least one fastening section set out of the plurality of fastening section sets are provided to be different from screw hole diameters, through-hole diameters and screw diameters of other fastening section sets, and the at least one fastening section set functions as the allowable section.

3. The air spring according to claim 1 or 2,
wherein the plurality of fastening sections include a plurality of fastening section sets in each of which a screw hole formed in one of the fitting ring and the top surface plate, a through-hole formed in another one of the fitting ring and the top surface plate, and a screw that is screwed into the screw hole through the through-hole are made one set, set positions of the plurality of fastening sections are provided at equal intervals along a same circumference with a center axis of the air spring as a center, in the fitting ring and the top surface plate, at least one fastening section set out of the plurality of fastening section sets is disposed in a position deviated in a radial direction of the air spring and/or a circumferential direction of the air spring from the set positions, other fastening section sets are disposed in the set positions, and the at least one fastening section set functions as the allowable section.

4. The air spring according to any one of claims 1 to 3,
wherein the allowable section includes a protruded section formed in one of the fitting ring and the top surface plate, and a recessed section formed in another one of the fitting ring and the top surface plate, and only when the fitting ring and the top surface plate are relatively in a specific positional relationship, with a center axis of the air spring as a center, the protruded section is fitted in the recessed section.

5. A method for assembling an air spring (1) comprising a top surface plate (2), a lower member (3), a cylindrical flexible member (4) interposed between the top surface plate and the lower member, a fitting ring (18) that fixes an upper end portion of the flexible member to the top surface plate, and a plurality of fastening sections (19) that fasten the fitting ring and the top surface plate,
**characterized in that** the air spring comprises an allowable section (29) that allows proper fastening of the fitting ring and the top surface plate only when the fitting ring and the top surface plate are relatively in a single specific positional relationship with a center axis of the air spring as a center, and
after a lower end portion of the flexible member is attached to the lower member, the fitting ring is fitted to an upper end portion of the flexible member while a position of the allowable section is adjusted so that a relative positional relationship between the top surface plate and the lower member after the fitting ring and the top surface plate are properly fastened becomes a positional relationship specified in advance, and thereafter, the fitting ring and the top surface plate are properly fastened.

## Patentansprüche

1. Luftfeder (1), umfassend:
eine obere Oberflächenplatte (2);
ein unteres Element (3);
ein zylindrisches flexibles Element (4), das zwischen der oberen Oberflächenplatte und dem unteren Element angeordnet ist;
einen Befestigungsring (18), der einen oberen Endabschnitt des flexiblen Elements an der oberen Oberflächenplatte befestigt; und
eine Vielzahl von Befestigungsabschnitten (19), die den Befestigungsring und die obere Oberflächenplatte befestigen;
**dadurch gekennzeichnet, dass** die Luftfeder einen zulassenden Abschnitt (29) umfasst, der eine richtige Befestigung des Befestigungsrings und der oberen Oberflächenplatte nur dann zulässt, wenn der Befestigungsring und die obere Oberflächenplatte relativ in einer einzigen spezifischen Positionsbeziehung mit einer Mittelachse der Luftfeder als Zentrum stehen.

2. Luftfeder nach Anspruch 1,
wobei die Vielzahl von Befestigungsabschnitten eine Vielzahl von Befestigungsabschnittsätzen umfasst, in denen jeweils ein Schraubenloch (21), das in einem von dem Befestigungsring und der oberen Oberflächenplatte ausgebildet ist, ein Durchgangsloch (22), das in einem anderen von dem Befestigungsring und der oberen Oberflächenplatte ausgebildet ist, und eine Schraube, die durch das Durchgangsloch in das Schraubenloch geschraubt ist, einen Satz bilden, ein Schraubenlochdurchmesser, ein Durchgangslochdurchmesser und ein Schraubendurchmesser von mindestens einem Befestigungsabschnittssatz aus der Vielzahl von Befestigungsabschnittssätzen so vorgesehen sind, dass sie sich von Schraubenlochdurchmessern, Durchgangslochdurchmessern und Schraubendurchmessern anderer Befestigungsabschnittssätze unterscheiden, und der mindestens eine Befestigungsabschnittssatz als der zulassende Abschnitt fungiert.

3. Luftfeder nach Anspruch 1 oder 2,
wobei die Vielzahl von Befestigungsabschnitten eine Vielzahl von Befestigungsabschnittsätzen umfassen, in denen jeweils ein Schraubenloch, das in einem von dem Befestigungsring und der oberen Oberflächenplatte ausgebildet ist, ein Durchgangsloch, das in einem anderen von dem Befestigungsring und der oberen Oberflächenplatte ausgebildet ist, und eine Schraube, die durch das Durchgangsloch in das Schraubenloch geschraubt wird, einen Satz bilden, Satzpositionen der Vielzahl von Befestigungsabschnitten in gleichen Abständen entlang eines gleichen Umfangs mit einer Mittelachse der Luftfeder als Zentrum, in dem Befestigungsring und der oberen Oberflächenplatte vorgesehen sind, wobei mindestens ein Befestigungsabschnittssatz von der Vielzahl der Befestigungsabschnittsätze in einer Position angeordnet ist, die in einer radialen Richtung der Luftfeder und/oder einer Umfangsrichtung der Luftfeder von den Satzpositionen abweicht, andere Befestigungsabschnittsätze in den Satzpositionen angeordnet sind, und der mindestens eine Befestigungsabschnittsatz als der zulassende Abschnitt fungiert.

4. Luftfeder nach einem der Ansprüche 1 bis 3,
wobei der zulassende Abschnitt einen vorstehenden Abschnitt, der in einem von dem Befestigungsring und der oberen Oberflächenplatte ausgebildet ist, und einen vertieften Abschnitt, der in einem anderen von dem Befestigungsring und der oberen Oberflächenplatte ausgebildet ist, umfasst, und nur dann, wenn der Befestigungsring und die obere Oberflächenplatte relativ in einer bestimmten Positionsbeziehung stehen, mit einer Mittelachse der Luftfeder als Zentrum, der vorstehende Abschnitt in den vertieften Abschnitt eingepasst ist.

5. Verfahren zum Zusammenbau einer Luftfeder (1), die eine obere Oberflächenplatte (2), ein unteres Element (3), ein zylindrisches flexibles Element (4), das zwischen der oberen Oberflächenplatte und dem unteren Element angeordnet ist, einen Befestigungsring (18), der einen oberen Endabschnitt des flexiblen Elements an der oberen Oberflächenplatte befestigt, und eine Vielzahl von Befestigungsabschnitten (19), die den Befestigungsring und die obere Oberflächenplatte befestigen, umfasst, **dadurch gekennzeichnet, dass** die Luftfeder einen zulassenden Abschnitt (29) umfasst, der eine richtige Befestigung des Befestigungsrings und der oberen Oberflächenplatte nur dann zulässt, wenn der Befestigungsring und die obere Oberflächenplatte relativ in einer einzigen spezifischen Positionsbeziehung mit einer Mittelachse der Luftfeder als Zentrum stehen, und nachdem ein unterer Endabschnitt des flexiblen Elements an dem unteren Element angebracht ist, der Befestigungsring an einem oberen Endabschnitt des flexiblen Elements angebracht wird, während eine Position des zulassenden Abschnitts so eingestellt wird, dass eine relative Positionsbeziehung zwischen der oberen Oberflächenplatte und dem unteren Element, nachdem der Befestigungsring und die obere Oberflächenplatte richtig befestigt sind, zu einer im Voraus festgelegten Positionsbeziehung wird, und danach der Befestigungsring und die obere Oberflächenplatte richtig befestigt werden.

## Revendications

1. Ressort pneumatique (1) comprenant :
une plaque de surface supérieure (2) ;
un élément inférieur (3) ;
un élément flexible cylindrique (4) qui est intercalé entre la plaque de surface supérieure et l'élément inférieur ;
une bague de montage (18) qui fixe une partie d'extrémité supérieure de l'élément flexible à la plaque de surface supérieure ; et
une pluralité de sections de fixation (19) qui fixent la bague de montage et la plaque de surface supérieure ;
**caractérisé en ce que** :
le ressort pneumatique comprend une section admissible (29) qui permet une fixation correcte de la bague de montage et de la plaque de surface supérieure uniquement lorsque la bague de montage et la plaque de surface supérieure sont relativement dans une relation de position unique spécifique avec un axe central du ressort pneumatique en tant que centre.

2. Ressort pneumatique selon la revendication 1,
dans lequel la pluralité de sections de fixation comprend une pluralité d'ensembles de sections de fixation dans chacun desquels un trou de vis (21) formé dans l'une parmi la bague de montage et la plaque de surface supérieure, un trou débouchant (22) formé dans une autre parmi la bague de montage et la plaque de surface supérieure, et une vis qui est vissée dans le trou de vis à travers le trou débouchant constituent un seul ensemble, un diamètre de trou de vis, un diamètre de trou débouchant et un diamètre de vis d'au moins un ensemble de sections de fixation parmi la pluralité d'ensembles de sections de fixation sont prévus pour être différents des diamètres de trou de vis, des diamètres de trou débouchant et des diamètres de vis des autres ensembles de sections de fixation, et le au moins un ensemble de sections de fixation sert de section admissible.

3. Ressort pneumatique selon la revendication 1 ou 2,
dans lequel la pluralité de sections de fixation comprend une pluralité d'ensembles de sections de fixation dans chacun desquels un trou de vis formé dans l'une parmi la bague de montage et la plaque de surface supérieure, un trou débouchant formé dans une autre parmi la bague de montage et la plaque de surface supérieure, et une vis qui est vissée dans le trou de vis à travers le trou débouchant constituent un ensemble, des positions d'ensemble de la pluralité de sections de fixation sont prévues à intervalles égaux le long d'une même circonférence avec un axe central du ressort pneumatique en tant que centre, dans la bague de montage et la plaque de surface supérieure, au moins un ensemble de sections de fixation parmi la pluralité d'ensembles de sections de fixation est disposé dans une position déviée dans une direction radiale du ressort pneumatique et/ou une direction circonférentielle du ressort pneumatique à partir des positions d'ensemble, d'autres ensembles de section de fixation sont disposés dans les positions d'ensemble, et le au moins un ensemble de sections de fixation sert de section admissible.

4. Ressort pneumatique selon l'une quelconque des revendications 1 à 3,
dans lequel la section admissible comprend une section en saillie formée dans l'une parmi la bague de montage et la plaque de surface supérieure, et une section évidée formée dans une autre parmi la bague de montage et la plaque de surface supérieure, et uniquement lorsque la bague de montage et la plaque de surface supérieure sont relativement dans une relation de position spécifique, avec un axe central du ressort pneumatique en tant que centre, la section en saillie est montée dans la section évidée.

5. Procédé pour assembler un ressort pneumatique (1) comprenant une plaque de surface supérieure (2), un élément inférieur (3), un élément flexible cylindrique (4) intercalé entre la plaque de surface supérieure et l'élément inférieur, une bague de montage (18) qui fixe une partie d'extrémité supérieure de l'élément flexible à la plaque de surface supérieure, et une pluralité de sections de fixation (19) qui fixe la bague de montage et la plaque de surface supérieure,
**caractérisé en ce que** :
le ressort pneumatique comprend une section admissible (29) qui permet la fixation correcte de la bague de montage et de la plaque de surface supérieure uniquement lorsque la bague de montage et la plaque de surface supérieure sont relativement dans une relation de position spécifique unique avec un axe central du ressort pneumatique en tant que centre, et
après qu'une partie d'extrémité inférieure de l'élément flexible a été fixée à l'élément inférieur, la bague de montage est montée sur une partie d'extrémité supérieure de l'élément flexible alors qu'une position de la section admissible est ajustée de sorte qu'une relation de position relative entre la plaque de surface supérieure et l'élément inférieur après que la bague de montage et la plaque de surface supérieure ont été correctement fixées, devient une relation de position spécifiée à l'avance, et après quoi, la bague de montage et la plaque de surface supérieure sont correctement fixées.
